# FASCICULE DE BREVET EUROPEEN

(11) **EP 2 763 426 B1**
(45) Date de publication et mention de la délivrance du brevet: **18.03.2020**
(21) Numéro de dépôt: 14153097.2
(22) Date de dépôt: 29.01.2014
(51) Int. Cl.: H04N 21/44, H04N 21/234, H04N 21/278, H04N 21/8352

(54) **Procédé de reconnaissance de contenus vidéo ou d'images en temps réel**
Verfahren zur Bild- und Videoinhaltserkennung in Echtzeit
Method for recognizing video contents or pictures in real-time

(30) Priorité: 30.01.2013 FR 1350801
(43) Date de publication de la demande: 06.08.2014
(73) Titulaire: CLICKON, 92200 Neuilly sur Seine (FR)
(72) Inventeur: Figeat, Pierre, 92200 NEUILLY SUR SEINE (FR); Brunin, Baptiste, 92500 RUEIL MALMAISON (FR)
(74) Mandataire: Oudin, Stéphane

(56) Documents cités:
- WO-A1-2004/004351
- WO-A2-2004/080073
- FR-A1- 2 843 212
- GB-A- 2 485 695
- US-A- 5 485 518
- US-A1- 2009 006 337
- US-A1- 2009 324 199
- US-A1- 2010 011 392

## Description

### Domaine technique

La présente invention concerne un procédé de reconnaissance de contenus vidéo ou d'images en temps réel. Ainsi, des contenus vidéo particuliers, transitant sur des réseaux, par exemple de télévision, peuvent être reconnus en temps réel pour qu'une action particulière soit déclenchée dès cette reconnaissance.

### Technique antérieure

Il est bien connu actuellement, qu'existent deux techniques de marquages de supports numériques, tels, qu'entre autres, les contenus vidéo, qui sont d'une part le « watermarking » ou tatouage numérique et d'autre part le « fingerprinting » ou empreinte numérique, techniques qui peuvent en outre être exploitées simultanément sur un même support.

La première concernant le tatouage numérique consiste à insérer une signature invisible et permanente sur des images numériques transitant sur des réseaux, tels que les réseaux de télévision, le réseau Internet, etc., pour assurer la protection des droits de propriété intellectuelle tels que les droits d'auteur ceci afin de lutter contre la fraude et le piratage. Ainsi, cette technique permet de garantir la paternité d'une œuvre numérique et également de dissuader le pirate dans la mesure où cette signature peut être facilement retrouvée dans chaque copie de l'image marquée à l'origine. Pour cela, dans chaque image est insérée une signature sous la forme d'un code d'identification invisible et indétectable par l'œil ou tout système ignorant son mode d'insertion. Cette signature doit bien entendu pouvoir résister à toutes les techniques de traitement d'images telles que la compression, le lissage, la rotation, etc..

La seconde qui concerne l'empreinte numérique bien que présentant le même but final est très différente de la première dans la manière d'opérer ainsi que dans les protections qu'elle fournit. L'empreinte numérique est une signature numérique appelée également signature électronique qui utilise un mécanisme permettant de garantir l'intégrité d'un document électronique et d'en authentifier de manière forte l'auteur. Ce mécanisme doit permettre au relecteur possédant la clé d'un document, d'identifier la personne ou l'organisme qui a apposé sa signature, de garantir que ledit document n'a pas été altéré entre l'instant où l'auteur l'a signé et le moment où le lecteur le consulte. Grâce à ce mécanisme, l'identité du signataire peut être retrouvée de manière certaine, la signature ne peut être falsifiée, elle ne peut être réutilisée, le document signé est inaltérable et irrévocable. La signature électronique n'est devenue exploitable qu'avec l'émergence de la cryptographie asymétrique. La forme de signature la plus connue mais non la plus performante est sans nul doute obtenue en utilisant une fonction de hachage cryptographique du type SHA (Secure Hash Algorithm).

De manière générique, le mécanisme dont il est question avec cette deuxième technique, utilise en fait un logiciel sophistiqué qui identifie, extrait puis compresse des parties caractéristiques pour autoriser l'identification unique et immédiate par la signature résultante du contenu vidéo ou de tout autre contenu numérique. Ainsi le contenu traité est converti au moyen du logiciel en un nombre unique de chaînes de caractères, ces chaînes de caractères permettant de comparer divers contenus et de retrouver le contenu signé.

Pour résumer simplement, le tatouage numérique correspond à une insertion d'une signature dans le contenu qui permet d'aider à sa détection ou son identification alors que l'empreinte numérique correspond à une opération à effectuer sur un contenu pour le signer de manière unique et pour rendre sa recherche plus aisée en comparaison avec d'autres contenus.

Or, il est à constater que jusqu'à présent aucun procédé ne permet d'effectuer une reconnaissance authentiquement en temps réel de contenus vidéo particuliers transitant sur des réseaux, par exemple de télévision, afin d'autoriser le déclenchement d'une action particulière dès cette reconnaissance. Ceci présente un très sérieux inconvénient pour les applications dont l'exploitation efficace prévoit le déclenchement d'actions particulières authentiquement en temps réel, dès qu'un contenu désiré a été détecté.

Le document US 2010/011392 A1 décrit une méthode permettant la génération de signatures pour différentes portions temporelles de contenu multimédia.

Le document US 2009/324199 A1 décrit une méthode de génération de signatures pour des signaux vidéos. La robustesse des signatures est améliorée en utilisant uniquement les parties centrales de l'image.

### Exposé de l'invention

La présente invention a pour but de proposer une solution efficiente aux problèmes et inconvénients présentés par les divers procédés de l'art antérieur et en particulier de permettre d'exploiter un procédé de reconnaissance de contenus vidéo ou d'images authentiquement en temps réel.

Pour cela le procédé de reconnaissance de contenus vidéo ou d'images transitant sur des réseaux selon l'invention est remarquable en ce qu'il est mis en œuvre en temps réel selon deux étapes subséquentes :
- une première étape dite de conversion au cours de laquelle sont créées les empreintes numériques uniques ou signatures uniques des nouveaux contenus vidéo ou d'images à reconnaître par la suite, lesdites signatures étant stockées sous un format spécifique dans des bases de données et des liens étant créés relativement à des actions, liées à chaque contenu vidéo ou d'image donné, à déclencher lors de la reconnaissance future d'un contenu vidéo ou d'une ou plusieurs images, puis
- une seconde étape dite d'analyse en temps réel au cours de laquelle une source vidéo est analysée en temps réel par une première unité de traitement distincte, des empreintes numériques temporaires ou signatures temporaires étant créées en temps réel, signatures, récupérées par une seconde unité de traitement distincte, qui sont alors comparées aux signatures présentes en base de données et lorsque qu'il y a reconnaissance de signatures, les actions liées au contenu vidéo ou de l'image analysé et reconnu sont alors déclenchées par une troisième unité de traitement distincte.

Ainsi, l'élément caractérisant du procédé selon l'invention est incontestablement et de manière essentielle son extrême rapidité, le temps de déclenchement d'actions après détection et reconnaissance d'un contenu vidéo ou d'une ou plusieurs images recherché étant toujours très inférieur à 10 millisecondes, ce qui peut être réellement qualifié de déclenchement en temps réel. En effet, les technologies, entre autres, utilisant la création d'empreintes numériques, prévues jusqu'à présent permettaient bien d'analyser des contenus vidéo mais aucune ne permettait de faire cette analyse en temps réel. Ainsi, ces technologies étaient efficaces pour retrouver des contenus vidéo très dégradés, mais sans aucun impératif de temps, par exemple pour la gestion de droit d'auteur sur des plateformes de type « YouTube », « Dailymotion », etc.. Bien entendu, le procédé selon l'invention, conserve son extrême et avantageuse rapidité et ce, même dans les cas de détériorations fortes du signal vidéo analysé, tels que des passages en noir et blanc, des apparitions de bandes noires, des problèmes de compression vidéo, des images floues ou sans contraste.

De cette manière, avantageusement, le procédé de reconnaissance de contenus vidéo ou d'images selon l'invention permet de produire une analyse efficace et de déclencher des actions ciblées authentiquement en temps réel du fait d'une part, de la manière dont l'empreinte numérique est créée puis le format spécifique sous lequel elle est stockée et d'autre part, du traitement appliqué, lors de la seconde étape, au moyen de trois unités de traitement distinctes (effectuant chacune leur propre tâche indépendamment les unes des autres), la comparaison des empreintes telles que stockées en base de données avec les empreintes temporaires créées en temps réel participant grandement à l'obtention de cet authentique et très net avantage. En outre, un autre important avantage présenté par le présent procédé est qu'il offre à l'utilisateur un contrôle total relativement aux actions à effectuer lors de la reconnaissance d'un contenu vidéo ou d'une ou plusieurs images.

De manière avantageuse, effectuée par la seconde unité de traitement distincte et utilisant, entre autres, un opérateur ET bit à bit, la comparaison de la signature temporaire obtenue au cours de la seconde étape dite d'analyse en temps réel avec les signatures indexées et stockées en base de données lors de la première étape dite de conversion se fait de la manière suivante :
- détermination du poids de la signature temporaire qui vient d'être créée, le poids de la signature obtenue correspondant au nombre de caractères de ladite signature valant 1,
- exécution des requêtes en base de données sur les signatures créées lors de la première étape dite de conversion et dont le poids est supérieur ou égal à 90% du poids déterminé de la signature temporaire,

- comparaison de la signature temporaire avec chaque signature créée lors de la première étape dite de conversion et dont le poids est supérieur ou égal à 90% du poids déterminé de la signature temporaire,
- comparaison pour retrouver dans les signatures comparées, le nombre de caractères valant 1 et qui sont placés dans les mêmes positions,
- lorsqu'un pourcentage déterminé d'identification est avéré entre les caractères valant 1 des signatures comparées, la reconnaissance est déclarée et les actions liées au contenu vidéo ou d'images analysé et reconnu sont déclenchées par la troisième unité de traitement distincte.

### Description sommaire des figures

D'autres avantages et caractéristiques ressortiront mieux de la description qui va suivre d'un mode préféré de mise en œuvre du procédé selon l'invention en référence aux figures annexées données à titre d'exemple non limitatif.
La figure 1 propose une représentation synthétique du processus dynamique de l'étape de conversion du procédé selon l'invention.
La figure 2 décrit un schéma de génération d'une signature unique, lors de l'étape de conversion, pour une image donnée d'un contenu vidéo.
La figure 3 propose une représentation synthétique du processus dynamique de l'étape d'analyse en temps réel du procédé selon l'invention.
La figure 4 décrit un schéma de génération d'une signature temporaire unique, lors de l'étape d'analyse en temps réel, pour une image donnée d'un flux vidéo.
La figure 5 montre le processus de comparaison entre une signature temporaire unique générée lors de l'étape dite d'analyse en temps réel et une signature unique créée lors de l'étape de conversion et stockée dans une base de données.

### Meilleure manière de réaliser l'invention technique

Pour une meilleure appréhension de l'objet de l'invention, cette dernière sera décrite au moyen de cinq schémas ordonnés sous forme de phases successives.

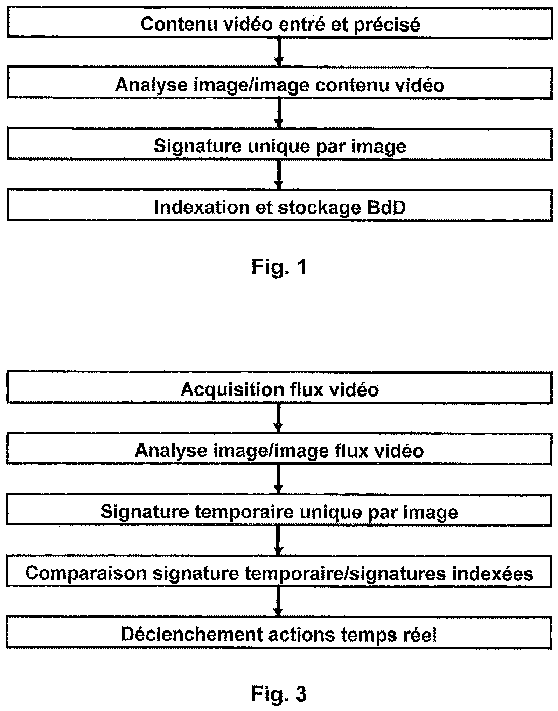

Ainsi, la figure 1 présente de manière synthétique le processus de la première étape dite de conversion du procédé selon l'invention. Dans cette étape sont créées les signatures uniques des contenus vidéo ou d'images à reconnaître, également appelées empreintes numériques, signatures stockées sous un format spécifique dans une base de données de même que sont enregistrées dans ladite base de données les actions à effectuer lors de la détection et donc de la reconnaissance d'un contenu vidéo ou d'une ou plusieurs images donné. Les actions peuvent, par exemple, correspondre à un déclenchement d'applications télévisées, à un déclenchement de services de type web, à des déclenchements d'applications de second et troisième écrans, à la génération de statistiques, etc..

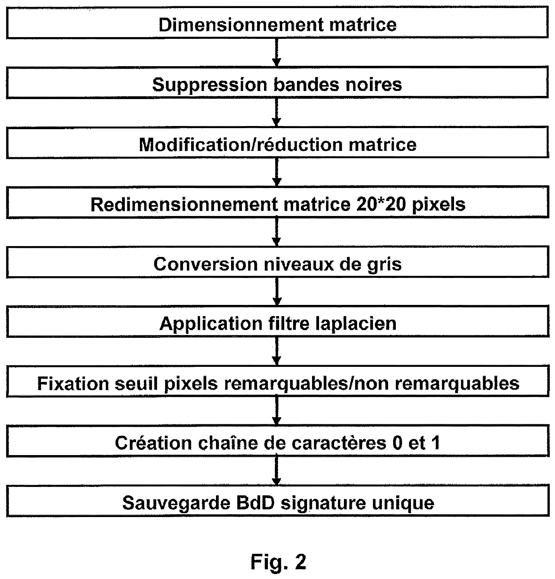

Le déroulement de cette étape se présente comme suit. Dans la phase 1 « contenu vidéo ou d'images entré et précisé », un nouveau contenu vidéo ou d'images destiné à être reconnu est accueilli et les informations relatives à ce dernier sont mémorisées. Ces informations sont au moins le nom de la vidéo ou des images, le nom de l'annonceur d'un produit déterminé, le produit en tant que tel présenté et la liste des actions à déclencher lors de la reconnaissance future dudit contenu vidéo ou d'images. Suit la phase 2 « analyse image par image du contenu vidéo ou d'images », au cours de laquelle le contenu vidéo ou d'images est analysé image par image, le nombre d'images analysées par défaut étant de 25 pour un contenu vidéo ou du nombre d'images à analyser, mais ce nombre d'images à analyser est réglable selon un choix de granularité qui permet de plus de gérer la durée sur laquelle le contenu vidéo ou d'images peut être reconnu. Puis, vient la phase 3 « signature unique par image », au cours de laquelle une signature unique par image analysée est générée, il y a donc, au moins par défaut selon le réglage, 25 signatures uniques pour un contenu vidéo. Le processus de création de signatures uniques sera explicité avec la figure 2. En dernier lieu, vient la phase 4 « indexation et stockage BdD », phase au cours de laquelle les signatures produites sont indexées et stockées en base de données (BdD) accompagnées des informations relatives audit contenu vidéo ou d'images. Le stockage se fait très avantageusement, comme précisé dans la suite, sous un format spécifique, de préférence ici sur 8 bits.

La figure 2 décrit, également par phase, le processus de création de signatures uniques, lors de l'étape dite de conversion, pour une image donnée d'un contenu vidéo ou d'images.

La génération d'une signature unique pour une image donnée d'un contenu vidéo ou d'images se fait selon les phases successives suivantes.

Lors de la phase 30 « dimensionnement matrice », l'image analysée est transformée en une matrice de dimension donnée faisant exactement la même taille que l'image de base. Phase 31 « suppression bandes noires », s'il existe des bandes noires dans l'image analysée, ces dernières sont détectées et supprimées. La matrice change, dans ce cas, de dimension lors de la suppression desdites bandes noires. Lors de la phase 32 « modification/réduction matrice », la matrice est modifiée par suppression de bandes en haut et en bas faisant la totalité de sa largeur et de préférence de 15% de sa hauteur. L'objectif est ici de se baser avantageusement sur les éléments visuels placés au centre de l'image en enlevant les zones du haut et du bas qui sont des zones peu employées pour transmettre une information visuelle essentielle. Lors de la phase 33 « redimensionnement matrice 20^{∗}20 pixels », la matrice est redimensionnée en une matrice carrée de, par exemple, 20 par 20 pixels, le but étant alors de se baser sur une signature créée sur une image de taille fixe se libérant profitablement des rapports de taille des images de base. Phase 34 « conversion niveaux de gris », la matrice est convertie en niveaux de gris, ce qui implique un passage de la matrice en noir et blanc avec des nuances de gris. Lors de la phase 35 « application filtre laplacien », un filtre de type laplacien est appliqué à la matrice obtenue pour mettre en valeur les détails qui présentent une variation rapide de luminosité et ainsi rendre avantageusement visible les contours des objets : phénomène de reconnaissance de formes. A la phase 36 « fixation seuil pixels remarquables/non remarquables », un seuil permettant de différencier les pixels remarquables des pixels non remarquables est défini, sur une variation de noir et blanc de préférence allant de 0 à 255. L'ensemble des pixels de la matrice est parcouru et ces derniers sont classés en pixels remarquables, supérieurs au seuil défini et pixels non remarquables, sous le seuil. Phase 37 « création chaîne de caractères 0 et 1 », une chaîne de caractères prenant des valeurs variant de 0 à 1, 0 pour les pixels non remarquables et 1 pour les pixels remarquables, est créée. Le premier caractère est choisi pour représenter la valeur du pixel en haut et à gauche de la matrice, le dernier caractère représentant la valeur du pixel en bas et à droite de la matrice. Enfin lors de la phase 38 « sauvegarde BdD signature unique », est mémorisé et stocké dans une base de données (BdD) un ensemble de valeurs, ici 50, correspondant à la chaîne de caractères représentant une signature unique ou empreinte numérique de l'image analysée qui comprend 400 caractères (matrice 20^{∗}20 pixels) variant de 0 à 1. En effet, une signature unique étant avantageusement stockée sur un format 8 bits, la signature de 400 caractères valant 0 ou 1 devient une signature de 50 valeurs (rapport de 400 à 8). Chaque valeur correspond à la valeur en format 8 bits d'une suite de 8 caractères de 0 à 1, sachant que 8 caractères binaires équivalent à une valeur 8 bits varient de 0 à 255. Cette caractéristique est éminemment avantageuse car elle permet de réduire très significativement le temps nécessaire, pour la suite, à la comparaison de deux signatures tout en autorisant une importante optimisation du stockage de signatures en base de données. En effet, seules 50 valeurs sont comparées au lieu de 400 caractères. Dans la suite, la comparaison est ainsi effectuée en prenant les caractères 8 à 8. En outre, pour avantageusement effectuer la comparaison, par la suite sera utilisé un « opérateur ET bit à bit », permettant de comparer les deux opérandes comme des données binaires et de retourner la valeur 1 si deux bits de même poids sont à 1. L'exemple suivant permettra de mieux appréhender cette intéressante caractéristique : comparer deux valeurs de 8 bits valant 9 et 12, leurs syntaxes en format binaire étant respectivement « 1001 » et « 1100 ». La comparaison des valeurs 9 et 12, en exploitant un ET bit à bit va ainsi donner « 1000 » car seul le premier « 1 » est présent dans les deux valeurs binaires « 1001 » et « 1100 ». Le résultat « 1000 » vaut de cette manière 8 en format décimal (8 équivalant à 1000 en binaire). Pour chaque comparaison, est alors récupéré un « score » (8 dans le présent exemple) qui est additionné à lui-même pour les 50 valeurs de 8 bits. Ainsi, plus le nombre obtenu en dernier lieu est élevé et plus la similarité entre deux signatures est forte. Est également sauvegardé en base de données le poids de la signature obtenue correspondant au nombre de caractères valant 1 de ladite signature.

La figure 3 présente à son tour de manière synthétique le processus de la seconde étape dite d'analyse en temps réel du procédé selon l'invention. Dans cette étape un flux vidéo, de types SDI/HDMI, flux IP, fichier local, etc., est analysé en temps réel par une première unité de traitement distincte afin de reconnaître au moyen d'une comparaison, effectuée par une seconde unité de traitement distincte les contenus analysés et indexés. Dès que le contenu est avéré reconnu, les actions liées à ce contenu sont déclenchées en temps réel par une troisième unité de traitement distincte.

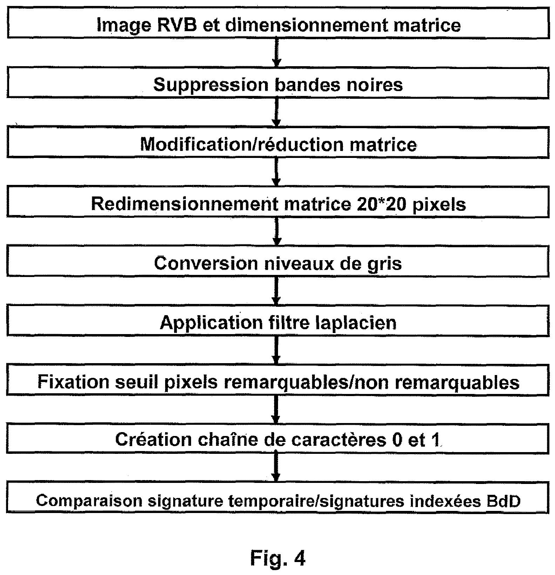

Le déroulement de cette étape se présente comme suit. Dans la phase 5 « acquisition flux vidéo », un flux vidéo est lu par la première unité de traitement distincte pour être ensuite comparé aux signatures uniques correspondant aux contenus vidéo ou d'images analysés lors de la première étape dite de conversion, signatures uniques présentes dans la base de données afin que, en cas d'appariement avec un contenu de la base de données, des actions soient déclenchées en temps réel. Suit la phase 6 « analyse image par image du flux vidéo », au cours de laquelle le flux vidéo est analysé image par image, toutes les images étant analysées. Puis vient la phase 7 « signature temporaire unique par image », au cours de laquelle une signature unique et temporaire est générée pour chaque image analysée. Le processus de création de signatures temporaires uniques mis en œuvre par la première unité de traitement distincte sera explicité avec la figure 4. Suit la phase 8 « comparaison signature temporaire/signatures indexées », dans laquelle la signature temporaire obtenue est comparée par la seconde unité de traitement distincte aux signatures indexées en base de données lors de la première étape dite de conversion. En dernier lieu, avec la phase 9 « déclenchement actions temps réel », en cas de reconnaissance avec une signature d'un contenu indexée de la base de données, sont déclenchées les actions correspondant aux informations accompagnant la signature reconnue indexée dans la base de données, cette phase 9 étant mise en œuvre par la troisième unité de traitement distincte.

Ainsi la première tâche consistant en l'acquisition d'un flux vidéo et en la création de signatures temporaires est prise en charge par la première unité de traitement. La seconde unité de traitement met en œuvre la seconde tâche consistant en la récupération des signatures temporaires et en leur comparaison avec les signatures stockées en base de données. Enfin, la troisième unité de traitement met en œuvre la troisième tâche consistant, en cas de reconnaissance avec une signature d'un contenu indexée de la base de données, à déclencher les actions correspondant aux informations accompagnant la signature reconnue indexée dans la base de données.

Chaque unité de traitement distincte est exécutée par un cœur d'un processeur ce qui autorise une gestion des tâches en parallèle améliorant significativement la vitesse d'exécution de chaque tâche. En effet, l'analyse d'une vidéo déroulant 25 images par seconde autorise 40ms de traitement entre chaque image, si une seule unité de traitement était utilisée pour gérer l'ensemble des tâches, cette dernière devrait donc effectuer l'ensemble des tâches en 40ms maximum. Le fait de séparer distinctement les diverses tâches implique une charge minimale pour chaque unité de traitement durant ces 40ms, ce qui entraîne une très significative amélioration des divers traitements en interdisant toute situation de blocage.

La figure 4 décrit, également par phase, mis en œuvre par la première unité de traitement distincte, le processus de création de signatures temporaires uniques, lors de l'étape d'analyse en temps réel, pour une image donnée d'un flux vidéo.

La génération d'une signature temporaire unique pour une image donnée d'un flux vidéo se fait selon les phases successives suivantes qui sont assez comparables aux phases décrites pour la génération d'une signature unique de l'étape dite de conversion.

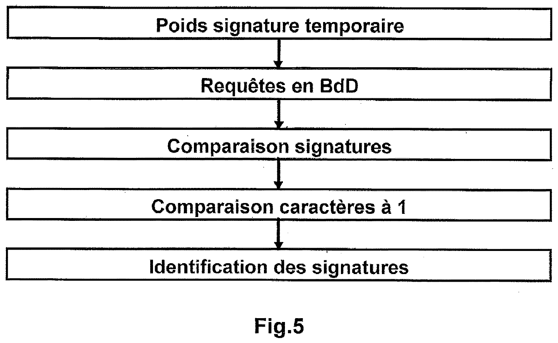

Lors de la phase 70 « image RVB et dimensionnement matrice », l'image analysée est transformée en image RVB puis transformée en une matrice de dimension donnée faisant exactement la même taille que l'image de base. Pour rappel, une image RVB est une image dans laquelle chaque pixel est défini par trois valeurs de rouge, de vert et de bleu. Phase 71 « suppression bandes noires », s'il existe des bandes noires dans l'image analysée, ces dernières sont détectées et supprimées. La matrice change, dans ce cas, de dimension lors de la suppression desdites bandes noires. Lors de la phase 72 « modification/réduction matrice », la matrice est modifiée par suppression de bandes en haut et en bas faisant la totalité de sa largeur et de préférence de 15% de sa hauteur, l'objectif étant toujours de se baser sur les éléments visuels placés au centre de l'image en enlevant les zones du haut et du bas qui sont des zones peu employées pour transmettre l'information visuelle caractéristique. Lors de la phase 73 « redimensionnement matrice 20^{∗}20 pixels », la matrice est redimensionnée en une matrice carrée de, par exemple, 20 par 20 pixels, le but étant également de se baser sur une signature créée sur une image de taille fixe pour s'exonérer des rapports de taille des images de base. Phase 74 « conversion niveaux de gris », la matrice est convertie en niveaux de gris, ce qui implique un passage de la matrice en noir et blanc avec des nuances de gris. Lors de la phase 75 « application filtre laplacien », un filtre de type laplacien est appliqué à la matrice obtenue mettant en valeur les détails qui présentent une variation rapide de luminosité rendant ainsi visible les contours des objets. A la phase 76 « fixation seuil pixels remarquables/non remarquables », un seuil permettant de différencier les pixels remarquables des pixels non remarquables est défini, sur une variation de noir et blanc de préférence allant de 0 à 255. Le seuil appliqué pour l'étape dite d'analyse en temps réel est choisi volontairement et avantageusement plus haut que celui appliqué pour l'étape dite de conversion afin que les signatures obtenues dans la phase suivante soient légèrement différentes, ceci afin de laisser une marge de reconnaissance, par exemple, pour le cas où la qualité d'image serait différente. L'ensemble des pixels de la matrice est parcouru et ces derniers sont classés en pixels remarquables, supérieurs au seuil défini et pixels non remarquables, sous le seuil. Phase 77 « création chaîne de caractères 0 et 1 », une chaîne de caractères prenant des valeurs variant de 0 à 1, 0 pour les pixels non remarquables et 1 pour les pixels remarquables, est créée. Le premier caractère est également choisi pour représenter la valeur du pixel en haut et à gauche de la matrice alors que le dernier caractère représente la valeur du pixel en bas et à droite de la matrice. Du fait du seuil choisi plus haut, il y aura plus de pixels remarquables donc à 1 dans les signatures créées en temps réel que dans les signatures créées lors de l'étape dite de conversion. Enfin, mis en œuvre par la seconde unité de traitement distincte, lors de la phase 78 « comparaison signature temporaire/signatures indexées en BdD », lorsque la comparaison conduit à une reconnaissance d'image, dès que quelques images sont reconnues, les actions enregistrées en base de données sont déclenchées en temps réel par la troisième unité de traitement distincte. Le processus de comparaison sera décrit ci-après au moyen de la figure 5.

La figure 5 montre plus précisément, mis en œuvre par la seconde unité de traitement distincte et utilisant, entre autres, un opérateur ET bit à bit, le processus de comparaison entre une signature temporaire unique générée lors de l'étape dite d'analyse en temps réel et une signature unique créée lors de l'étape dite de conversion et stockée dans une base de données. Cette comparaison se fait selon les phases suivantes.

La phase 780 « poids signature temporaire », permet de déterminer le poids de la signature temporaire qui vient d'être créée, le poids correspondant au nombre de 1 présents dans ladite signature. Lors de la phase 781 « requêtes en BdD », des requêtes sont exécutées en base de données sur les signatures créées lors de l'étape dite de conversion, signatures dont le poids est supérieur ou égal à 90% du poids de la signature temporaire à comparer. Cette condition permet ainsi d'avantageusement et aisément éliminer les requêtes sur des signatures dont le poids est très différent de la signature temporaire à comparer. Lors de la phase 782 « comparaison signatures », la signature temporaire à comparer est rapprochée des signatures uniques dont les poids quasi-équivalents, supérieurs ou égaux à 90% de celui de la signature temporaire, sont stockés dans la base de données. La phase 783 « comparaison caractères à 1 », a pour but, lors de la comparaison, de retrouver dans les signatures comparées, signature temporaire et signatures rapprochées, le nombre de caractères valant 1 et qui sont placés dans des positions similaires. Enfin phase 784 « identification des signatures », lorsqu'un pourcentage déterminé suffisant d'identification est avéré entre les caractères à 1 des deux signatures comparées, la reconnaissance de contenu est déclarée. Cependant, pour des raisons de sécurité afin que cette reconnaissance soit certaine, le procédé prévoit d'attendre que deux images consécutives soient déclarées reconnues sur un même contenu pour déclarer officiellement la reconnaissance et, mis en œuvre par la troisième unité de traitement distincte, déclencher alors les actions liées au contenu vidéo, actions stockées en base de données.

De manière générique, les fonctions caractéristiques présentées pour la mise en œuvre du procédé selon l'invention peuvent être énumérées de la sorte. Pour ce qui est de l'étape dite de conversion :
- création et indexation de signatures ou empreintes numériques, basées sur des contenus vidéo ou d'images,
- suppression de signatures de la base de données,
- lien pour les services web à synchroniser avec les contenus signés,
- lien entre les diverses applications utilisant le procédé selon l'invention et tout contenu signé,
- réglages de la granularité (nombre d'images à analyser) et du temps/retard d'acquisition.

Pour ce qui est de l'étape d'analyse en temps réel :
- passage et analyse d'un flux vidéo et reconnaissance d'un contenu vidéo ou d'images en temps réel,
- arrêt de l'analyse d'un flux vidéo,
- synchronisation automatique d'actions à déclencher grâce aux services web en direct,
- synchronisation automatique sur le standard de communication permettant de bénéficier de services interactifs avec les programmes TV en direct,
- suivi du flux analysé.

Pour la mise en œuvre des deux étapes du procédé selon l'invention le système d'exploitation a été choisi de préférence sous Linux, les protocoles supportés pour les services web étaient de préférence REST et SOAP.

Pour l'étape dite de conversion et de manière non exhaustive, les formats vidéo supportés sont les formats AVI/FLV/TS/MPEG/MOV/WMV/MKV, les formats d'images supportés étant BMP/DIB/JPEG/JPG/JPE/PNG/PBMPGM/PPM/SR/RAS/TIFF/TIF.

Pour l'étape dite d'analyse en temps réel et de manière également non exhaustive, les formats vidéo supportés sont de préférence les formats SDI/HDMI input (8 bits YUV PixelFormat), qui acceptent par exemple les standards suivants : NTSC/NTSC2398/NTSCp/PAL/PALp/HD720p50/HD720p5994/HD720p60/HD1080p2398/HD1080p24/HD1080p25/HD1080p2997/HD1080p30/HD1080i50/HD1080i5994/HD1080i6000/HD1080p5994/HD1080p6000/http/UDP/RTP VideoStreamsProtocols/AVI/FLV/TS/MPEG/MOV/WMV/MKV.

## Revendications

1. Procédé de reconnaissance de contenus vidéo ou d'images transitant sur des réseaux qui est mis en œuvre en temps réel selon deux étapes subséquentes :
- une première étape dite de conversion au cours de laquelle sont créées les signatures uniques des nouveaux contenus vidéo ou d'images à reconnaître par la suite, lesdites signatures étant stockées sous un format spécifique dans des bases de données et des liens étant créés relativement à des actions, liées à chaque contenu vidéo ou d'images donné, à déclencher pour la reconnaissance future d'un contenu vidéo ou d'images, puis
- une seconde étape dite d'analyse en temps réel au cours de laquelle une source vidéo est analysée en temps réel par une première unité de traitement distincte, des signatures temporaires étant créées en temps réel, signatures, récupérées par une seconde unité de traitement distincte, qui sont alors comparées aux signatures présentes en base de données et lorsque qu'il y a reconnaissance de signatures, les actions liées au contenu vidéo analysé et reconnu sont alors déclenchées par une troisième unité de traitement distincte, le temps de déclenchement d'actions après détection et reconnaissance d'un contenu vidéo, ou d'une ou plusieurs images, recherché étant inférieur à 10 millisecondes,
alors que, lors de la première étape dite de conversion, la production d'une signature unique par image analysée est générée comme suit :
- transformation de l'image analysée en une matrice de dimension donnée faisant la même taille que l'image de base (30),
- détection et suppression des bandes noires lorsqu'elles existent dans ladite image (31), la matrice changeant dans ce cas de dimension,
- modification de la matrice par suppression de bandes en haut et en bas de ladite matrice (32), faisant la totalité de sa largeur et un pourcentage de sa hauteur,
- redimensionnement de la matrice en une matrice de 20^{∗}20 pixels (33),
- conversion de la matrice en niveaux de gris (34),
- application d'un filtre de type laplacien (35),
- définition d'un seuil permettant de différencier les pixels remarquables des pixels non remarquables (36) sur une variation de noir et blanc, puis parcours de l'ensemble des pixels de la matrice et classement des pixels en pixels remarquables, c'est-à-dire supérieurs au seuil, et en pixels non remarquables,
- création d'une chaîne de caractères prenant des valeurs variant de 0 à 1 (37), 0 pour les pixels non remarquables et 1 pour les pixels remarquables, le premier caractère représentant la valeur du pixel en haut et à gauche de la matrice et le dernier caractère représentant la valeur du pixel en bas et à droite de la matrice,
- indexation et stockage sur un format 8 bits en base de données de la chaîne de caractères (38) représentant une signature unique de l'image analysée et comprenant 400 caractères variant de 0 à 1, soit 50 valeurs format 8 bits, le poids de la signature obtenue correspondant au nombre de caractères de ladite signature valant 1 étant également mémorisé et stocké dans la base de données.

2. Procédé de reconnaissance de contenus vidéo ou d'images selon la revendication 1 **caractérisé en ce que** lors de la modification de la matrice par suppression de bandes en haut et en bas (32), le pourcentage de la hauteur est de 15%.

3. Procédé de reconnaissance de contenus vidéo ou d'images selon la revendication 1 ou 2 **caractérisé en ce que** lors de la définition du seuil permettant de différentier les pixels remarquables des pixels non remarquables (36), la variation de noir et blanc est comprise entre 0 et 255.

4. Procédé de reconnaissance de contenus vidéo ou d'images selon l'une des revendications 1 à 3 **caractérisé en ce que** lors de la seconde étape dite d'analyse en temps réel, la production d'une signature temporaire et unique par image analysée est générée comme suit par la première unité de traitement distincte :
- transformation de l'image analysée en image RVB et en une matrice de dimension donnée faisant la même taille que l'image de base (70),
- détection et suppression des bandes noires (71) lorsqu'elles existent dans ladite image, la matrice changeant dans ce cas de dimension,
- modification de la matrice par suppression de bandes en haut et en bas de ladite matrice (72), faisant la totalité de sa largeur et un pourcentage de sa hauteur,
- redimensionnement de la matrice en une matrice de 20^{∗}20 pixels (73),
- conversion de la matrice en niveaux de gris (74),
- application d'un filtre de type laplacien (75),
- définition d'un seuil permettant de différencier les pixels remarquables des pixels non remarquables (76) sur une variation de noir et blanc, le seuil appliqué pour l'étape d'analyse en temps réel étant choisi plus haut que celui appliqué lors de l'étape de conversion puis parcours de l'ensemble des pixels de la matrice et classement des pixels en pixels remarquables, c'est-à-dire supérieurs au seuil, et en pixels non remarquables,
- création d'une chaîne de caractères prenant des valeurs variant de 0 à 1 (77), 0 pour les pixels non remarquables et 1 pour les pixels remarquables, le premier caractère représentant la valeur du pixel en haut et à gauche de la matrice et le dernier caractère représentant la valeur du pixel en bas et à droite de la matrice,
- comparaison par la seconde unité de traitement distincte de la signature ainsi obtenue avec les signatures indexées et stockées en base de données (78) et dès que la reconnaissance est avérée, déclenchement des actions liées au contenu vidéo analysé et reconnu par la troisième unité de traitement distincte.

5. Procédé de reconnaissance de contenus vidéo ou d'images selon la revendication 4 **caractérisé en ce que** lors de la modification de la matrice par suppression de bandes en haut et en bas (72), le pourcentage de la hauteur est de 15%.

6. Procédé de reconnaissance de contenus vidéo ou d'images selon la revendication 4 ou 5 **caractérisé en ce que** lors de la définition du seuil permettant de différentier les pixels remarquables des pixels non remarquables (76), la variation de noir et blanc est comprise entre 0 et 255.

7. Procédé de reconnaissance de contenus vidéo ou d'images selon l'une des revendications 1 à 6 **caractérisé en ce que**, effectuée par la seconde unité de traitement distincte et utilisant, entre autres, un opérateur ET bit à bit, la comparaison de la signature temporaire obtenue au cours de la seconde étape dite d'analyse en temps réel avec les signatures indexées et stockées en base de données lors de la première étape dite de conversion se fait de la manière suivante :
- détermination du poids de la signature temporaire (780) qui vient d'être créée, le poids de la signature obtenue correspondant au nombre de caractères de ladite signature valant 1,
- exécution des requêtes en base de données (781) sur les signatures créées lors de la première étape dite de conversion et dont le poids est supérieur ou égal à 90% du poids déterminé de la signature temporaire,
- comparaison de la signature temporaire avec chaque signature créée lors de la première étape dite de conversion et dont le poids est supérieur ou égal à 90% du poids déterminé de la signature temporaire (782),
- comparaison pour retrouver dans les signatures comparées, le nombre de caractères valant 1 et qui sont placés dans les mêmes positions (783),
- lorsqu'un pourcentage déterminé d'identification (784) est avéré entre les caractères valant 1 des signatures comparées, la reconnaissance est déclarée et les actions liées au contenu vidéo ou d'images analysé et reconnu sont déclenchées par la troisième unité de traitement distincte.

## Patentansprüche

1. Verfahren zur Erkennung von in Netzen verkehrenden Video- oder Bildinhalten, das in Echtzeit gemäß zwei aufeinanderfolgenden Schritten umgesetzt wird:
- einem ersten sogenannten Umwandlungsschritt, in dessen Verlauf die eindeutigen Signaturen der neuen Video- oder Bildinhalte erzeugt werden, die in der Folge erkannt werden sollen, wobei die Signaturen in einem spezifischen Format in Datenbanken gespeichert werden und wobei Verknüpfungen bezüglich mit jedem gegebenen Video- oder Bildinhalt verknüpften Aktionen erzeugt werden, die bei der künftigen Erkennung eines Video- oder Bildinhalts ausgelöst werden sollen, und anschließend
- einem zweiten sogenannten Echtzeit-Analyseschritt, in dessen Verlauf eine Videoquelle in Echtzeit von einer ersten separaten Verarbeitungseinheit analysiert wird, wobei in Echtzeit temporäre Signaturen erzeugt werden, Signaturen, die, von einer zweiten separaten Verarbeitungseinheit abgerufen, dann mit den in der Datenbank vorhandenen Signaturen verglichen werden und, wenn es eine Erkennung von Signaturen gibt, dann die mit dem analysierten und erkannten Videoinhalt verknüpften Aktionen von einer dritten separaten Verarbeitungseinheit ausgelöst werden, wobei die Zeit zum Auslösen von Aktionen nach Erfassung und Erkennung eines gesuchten Videoinhalts oder gesuchten Inhalts eines oder mehrerer Bilder weniger als 10 Millisekunden beträgt,
wohingegen beim ersten sogenannten Umwandlungsschritt die Erstellung einer eindeutigen Signatur pro analysiertem Bild wie folgt generiert wird:
- Transformieren des analysierten Bildes in eine Matrix einer gegebenen Dimension, die dieselbe Größe wie das Basisbild ergibt (30),
- Erfassen und Löschen der schwarzen Bänder, sofern sie im Bild existieren (31), wobei die Matrix in diesem Fall die Dimension ändert,
- Modifizieren der Matrix durch Löschen von Bändern oben und unten in der Matrix (32), die ihre gesamte Breite und einen Prozentsatz ihrer Höhe ergeben,
- Redimensionieren der Matrix in eine Matrix von 20^{∗}20 Pixel (33),
- Umwandeln der Matrix in Graustufen (34),
- Anwenden eines Filters vom Laplace-Typ (35),
- Definieren einer Schwelle, die es ermöglicht, die beachtenswerten Pixel von den nicht beachtenswerten Pixeln zu unterscheiden (36), auf einer Variation von Schwarz und Weiß, anschließend Durchsuchen der Gesamtheit der Pixel der Matrix und Klassieren der Pixel in beachtenswerte, das heißt über der Schwelle liegende Pixel, und in nicht beachtenswerte Pixel,
- Erzeugen einer Kette von Zeichen, die Werte annehmen, die von 0 bis 1 variieren (37), 0 für die nicht beachtenswerten Pixel und 1 für die beachtenswerten Pixel, wobei das erste Zeichen den Wert des Pixels links oben in der Matrix darstellt und das letzte Zeichen den Wert des Pixels rechts unten in der Matrix darstellt,
- Indexieren und Speichern der Zeichenkette (38), die eine eindeutige Signatur des analysierten Bildes darstellt und 400 Zeichen, die von 0 bis 1 variieren, das heißt 50 Werte in 8-Bit-Format umfasst, in einem 8-Bit-Format in der Datenbank, wobei das Gewicht der erhaltenen Signatur, das der Anzahl von Zeichen der Signatur entspricht, die den Wert 1 besitzen, ebenfalls in der Datenbank abgelegt und gespeichert wird.

2. Verfahren zur Erkennung von Video- oder Bildinhalten nach Anspruch 1, **dadurch gekennzeichnet, dass** beim Modifizieren der Matrix durch Löschen von Bändern oben und unten (32) der Prozentsatz der Höhe 15 % beträgt.

3. Verfahren zur Erkennung von Video- oder Bildinhalten nach Anspruch 1 oder 2, **dadurch gekennzeichnet, dass** beim Definieren der Schwelle, die es ermöglicht, die beachtenswerten Pixel von den nicht beachtenswerten Pixeln zu unterscheiden (36), die Variation von Schwarz und Weiß im Bereich zwischen 0 und 255 liegt.

4. Verfahren zur Erkennung von Video- oder Bildinhalten nach einem der Ansprüche 1 bis 3, **dadurch gekennzeichnet, dass** beim zweiten sogenannten Echtzeit-Analyseschritt die Erstellung einer temporären und eindeutigen Signatur pro analysiertem Bild wie folgt durch die erste separate Verarbeitungseinheit generiert wird:
- Transformieren des analysierten Bildes in ein RGB-Bild und in eine Matrix einer gegebenen Dimension, die dieselbe Größe wie das Basisbild (70) ergibt,
- Erfassen und Löschen der schwarzen Bänder (71), sofern sie im Bild existieren, wobei die Matrix in diesem Fall die Dimension ändert,
- Modifizieren der Matrix durch Löschen von Bändern oben und unten in der Matrix (72), die ihre gesamte Breite und einen Prozentsatz ihrer Höhe ergeben,
- Redimensionieren der Matrix in eine Matrix von 20^{∗}20 Pixel (73),
- Umwandeln der Matrix in Graustufen (74),
- Anwenden eines Filters vom Laplace-Typ (75),
- Definieren einer Schwelle, die es ermöglicht, die beachtenswerten Pixel von den nicht beachtenswerten Pixeln zu unterscheiden (76), auf einer Variation von Schwarz und Weiß, wobei die Schwelle, die beim Schritt der Echtzeitanalyse angewendet wird, höher gewählt wird als jene, die beim Schritt des Umwandelns und anschließend Durchsuchens der Gesamtheit der Pixel der Matrix und Klassierens der Pixel in beachtenswerte, das heißt über der Schwelle liegende Pixel, und in nicht beachtenswerte Pixel angewendet wird,
- Erzeugen einer Kette von Zeichen, die Werte annehmen, die von 0 bis 1 variieren (77), 0 für die nicht beachtenswerten Pixel und 1 für die beachtenswerten Pixel, wobei das erste Zeichen den Wert des Pixels links oben in der Matrix darstellt und das letzte Zeichen den Wert des Pixels rechts unten in der Matrix darstellt,
- Vergleichen der so erhaltenen Signatur durch die zweite separate Verarbeitungseinheit mit den indexierten und in der Datenbank gespeicherten Signaturen (78), und sobald die Erkennung erwiesen ist, Auslösen der mit dem analysierten und erkannten Videoinhalt verknüpften Aktionen durch die dritte separate Verarbeitungseinheit.

5. Verfahren zur Erkennung von Video- oder Bildinhalten nach Anspruch 4, **dadurch gekennzeichnet, dass** beim Modifizieren der Matrix durch Löschen von Bändern oben und unten (72) der Prozentsatz der Höhe 15 % beträgt.

6. Verfahren zur Erkennung von Video- oder Bildinhalten nach Anspruch 4 oder 5, **dadurch gekennzeichnet, dass** beim Definieren der Schwelle, die es ermöglicht, die beachtenswerten Pixel von den nicht beachtenswerten Pixeln zu unterscheiden (76), die Variation von Schwarz und Weiß im Bereich zwischen 0 und 255 liegt.

7. Verfahren zur Erkennung von Video- oder Bildinhalten nach einem der Ansprüche 1 bis 6, **dadurch gekennzeichnet, dass** das Vergleichen der im Laufe des zweiten sogenannten Echtzeit-Analyseschritts erhaltenen temporären Signatur mit den beim ersten sogenannten Umwandlungsschritt indexierten und in der Datenbank gespeicherten Signaturen, das durch die zweite separate Verarbeitungseinheit und unter Verwendung unter anderem eines UND-Operators von Bit zu Bit vorgenommen wird, auf die folgende Weise erfolgt:
- Bestimmen des Gewichts der temporären Signatur (780), die soeben erzeugt wurde, wobei das Gewicht der erhaltenen Signatur der Anzahl von Zeichen der Signatur entspricht, die den Wert 1 besitzen,
- Ausführen der Datenbankabfragen (781) bezüglich der Signaturen, die beim ersten sogenannten Umwandlungsschritt erzeugt wurden und deren Gewicht größer als oder gleich 90 % des bestimmten Gewichts der temporären Signatur ist,
- Vergleichen der temporären Signatur mit jeder Signatur, die beim ersten sogenannten Umwandlungsschritt erzeugt wurde und deren Gewicht größer als oder gleich 90 % des bestimmten Gewichts der temporären Signatur ist (782),
- Vergleichen, um in den verglichenen Signaturen die Anzahl von Zeichen herauszufinden, deren Wert 1 beträgt und die an denselben Stellen platziert sind (783),
- wenn sich zwischen den Zeichen der verglichenen Signaturen, die den Wert 1 besitzen, ein bestimmter Identifizierungsprozentsatz erweist (784), wird die Erkennung erklärt und werden von der dritten separaten Verarbeitungseinheit die mit dem analysierten und erkannten Video- oder Bildinhalt verknüpften Aktionen ausgelöst.

## Claims

1. Method for recognising video contents or images travelling over networks which is implemented in real-time according to two subsequent steps:
- a first step called conversion step, during which unique signatures of new video contents or images to subsequently be recognised are created, said signatures being stored in a specific format in databases and links being created relative to actions, linked to each given video content or images, to trigger for the future recognition of a video content or images, then
- a second step called real-time analysis step, during which a video source is analysed in real-time by a first separate processing unit, time signatures being created in real-time, signatures, recovered by a second separate processing unit, which are thus compared with the present signatures in the database and when there is signature recognition, the actions linked to the video content analysed and recognised are thus triggered by a third separate processing unit, the time for triggering actions after detection and recognition of a video content, or of one or more images, sought being less than 10 milliseconds,
while, during the first step called conversion step, the production of one unique signature per analysed image is generated as follows:
- transformation of the analysed image into a given dimension matrix being the same size as the base image (30),
- detection and removal of black strips when they exist in said image (31), the matrix changing in this case, dimension,
- modification of the matrix by removing top and bottom strips from said matrix (32), forming all of the width thereof and a percentage of the height thereof,
- resizing the matrix into a matrix of 20x20 pixels (33),
- conversion of the matrix into grey levels (34),
- application of Laplacian type filter (35),
- definition of a threshold making it possible to differentiate the noticeable pixels from the non-noticeable pixels (36) over a variation of black and white, then paths of all of the pixels of the matrix and classifying pixels into noticeable pixels, i.e. greater than the threshold, and into non-noticeable pixels,
- creation of a chain of characters having values varying from 0 to 1 (37), 0 for non-noticeable pixels and 1 for noticeable pixels, the first character representing the value of the top pixel and pixel to the left of the matrix and the last character representing the value of the bottom pixel and pixel to the right of the matrix,
- indexing and storing on an 8-bit format in the database of the chain of characters (38) representing a unique signature of the analysed image and comprising 400 characters varying from 0 to 1, that is 50 values forming 8 bits, the weight of the signature obtained corresponding to the number of characters of said signature equalling 1 also being memorised and stored in the database.

2. Method for recognising video contents or images according to claim 1, **characterised in that** during the modification of the matrix by removal of top and bottom strips (32), the percentage of the height is 15%.

3. Method for recognising video contents or images according to claim 1 or 2, **characterised in that** during the definition of the threshold making it possible to differentiate the noticeable pixels from the non-noticeable pixels (36), the variation of black and white is of between 0 and 255.

4. Method for recognising video contents or images according to one of claims 1 to 3, **characterised in that** during the second step called real-time analysis step, the production of a time and unique signature by the analysed image is generated as follows by the first separate processing unit:
- transformation of the analysed image into an RGB image and into a given dimension matrix being the same size as the base image (70),
- detection and removal of black strips (71) when they exist in said image, the matrix changing in this case, dimension,
- modification of the matrix by removing top and bottom strips of said matrix (72), forming all of the width thereof and a percentage of the height thereof,
- resizing of the matrix into a matrix of 20x20 pixels (73),
- conversion of the matrix into grey levels (74),
- application of a Laplacian type filter (75),
- definition of a threshold making it possible to differentiate the noticeable pixels from the non-noticeable pixels (76) over a variation of black and white, the threshold applied for the real-time analysis step being selected greater than that applied during the conversion step, then paths of all of the pixels of the matrix and classifying the pixels into noticeable pixels, i.e. greater than the threshold, and into non-noticeable pixels,
- creation of a chain of characters having values varying from 0 to 1 (77), 0 for non-noticeable pixels and 1 for noticeable pixels, the first character representing the value of the top pixel and pixel to the left of the matrix and the last character representing the value of the bottom pixel and pixel to the right of the matrix,
- comparison by the second separate processing unit of the signature thus obtained with the signatures indexed and stored in the database (78) and as soon as the recognition is proven, triggering of the actions linked to the video content and recognised by the third separate processing unit.

5. Method for recognising video contents or images according to claim 4, **characterised in that** during the modification of the matrix by removing top and bottom strips (72), the percentage of the height is 15%.

6. Method for recognising video contents or images according to claim 4 or 5, **characterised in that** during the definition of the threshold making it possible to differentiate the noticeable pixels from the non-noticeable pixels (76), the variation of black and white is of between 0 and 255.

7. Method for recognising video contents or images according to one of claims 1 to 6, **characterised in that**, carried out by the second separate processing unit and using, among others, a bit-to-bit AND operator, the comparison of the time signature obtained during the second step called real-time analysis step with the signatures indexed and stored in the database during the first step called conversion step is done in the following manner:
- determination of the weight of the time signature (780) which has just been created, the weight of the signature obtained corresponding to the number of characters of said signature equalling 1,
- execution of requests in the database (781) on signatures created during the first step called conversion step and of which the weight is greater than or equal to 90% of the determined weight of the time signature,
- comparison of the time signature with each signature created during the first step called conversion step and of which the weight is greater than or equal to 90% of the determined weight of the time signature (782),
- comparison to find, in the signatures compared, the number of characters equalling 1 and which are placed in the same positions (783),
- when a determined identification percentage (784) is proven between the characters equalling 1 of the signatures compared, the recognition is declared and the actions linked to the video content or images analysed and recognised are triggered by the third separate processing unit.
